(19) Europäisches Patentamt
European Patent Office
Office européen des brevets

(11) EP 3 387 066 B1

(12) **EUROPEAN PATENT SPECIFICATION**

(45) Date of publication and mention of the grant of the patent:
**06.11.2019 Bulletin 2019/45**

(21) Application number: **16805337.9**

(22) Date of filing: **22.11.2016**

(51) Int Cl.:
***C08L 23/12*** *(2006.01)* ***C08F 110/06*** *(2006.01)*

(86) International application number:
**PCT/EP2016/078417**

(87) International publication number:
**WO 2017/097579 (15.06.2017 Gazette 2017/24)**

# (54) PROPYLENE BASED POLYMER COMPOSITION

PROPYLENBASIERTE POLYMERZUSAMMENSETZUNG

COMPOSITION POLYMÈRE À BASE DE PROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.12.2015 EP 15199651**
**11.10.2016 EP 16193190**

(43) Date of publication of application:
**17.10.2018 Bulletin 2018/42**

(73) Proprietor: **Basell Poliolefine Italia S.r.l.**
**20121 Milano (IT)**

(72) Inventors:
- **COVEZZI, Massimo**
**44122 Ferrara (IT)**
- **MASSARI, Paola**
**44122 Ferrara (IT)**
- **CAVALIERI, Claudio**
**44122 Ferrara (IT)**
- **MARZOLLA, Roberta**
**44122 Ferrara (IT)**

(74) Representative: **Sacco, Marco**
**Basell Poliolefine Italia S.r.l.**
**Intellectual Property**
**P.le Donegani, 12**
**44122 Ferrara (IT)**

(56) References cited:
**WO-A1-2009/080485** **US-B2- 6 818 703**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 387 066 B1

## Description

### FIELD OF THE INVENTION

The present disclosure relates to a composition comprising a copolymers of propylene with 1-hexene and a copolymer of propylene and ethylene particularly suited for preparing films, in particular biaxially oriented polypropylene films (BOPP) and cast films having a low seal initiation temperature (SIT), high transparency and printability.

### BACKGROUND OF THE INVENTION

Copolymer of propylene and 1-hexene are already known in the art, for example WO 2006/002778 relates to a copolymer of propylene and 1-hexene having from 0.2 to 5 wt% of 1-hexene derived units. This copolymer have a molecular weight distribution of monomodal type and are used for pipes systems.

WO 2009/077287 relates to a a copolymer of propylene with hexene-1 containing from 5 to 9% by weight of recurring units derived from hexene-1, said copolymer having a melting temperature from 125°C to 140°C and Melt Flow Rate (ASTM D1238, 230°C/2.16 kg) from 0.1 to 3 g/10 min.

WO 2015/062787 relates to a multimodal copolymers of propylene and 1-hexene having a content of 1-hexene derived units ranging from 0.6 wt% to 3.0 wt% especially suitable for the production of industrial sheets.

The applicant found that it is possible to produce BOPP and cast films having a low value of haze, low seal initiation temperature (SIT) and good dyne retention by using a composition comprising a propylene 1-hexene copolymer and a propylene ethylene copolymer.

### SUMMARY OF THE INVENTION

Thus the present disclosure provides a propylene polymer composition comprising:

a) from 40 wt% to 80 wt% of a propylene 1-hexene copolymer containing from 5.5 to 9.0% by weight, of 1-hexene derived units having a Melt Flow Rate (MFR, measured according to ASTM D 1238, 230°C/2.16 kg, i.e. at 230°C, with a load of 2.16 kg) from 3.5 to 12.0 g/10 min;
b) from 20 wt% to 60 wt% of a propylene ethylene copolymer containing from 1.5 wt% to 6.5 wt% of ethylene derived units, a having a Melt Flow Rate (MFR, measured according to ASTM D 1238, 230°C/2.16 kg, i.e. at 230°C, with a load of 2.16 kg) from 3.5 to 12.0 g/10 min;

the sum of the amount of a) and b) being 100.

### DETAILED DESCRIPTION OF THE INVENTION

The present disclosure provides a propylene polymer composition comprising:

a) from 40 wt% to 80 wt%; preferably from 45 wt% to 74 wt%; more preferably from 48 wt% to 63 wt% of a propylene 1-hexene copolymer containing from 5.5 to 9.0% by weight, preferably from 6.0 to 8.5% by weight, more preferably from 6.5 to 8.0% by weight of 1-hexene derived units, having a Melt Flow Rate (MFR, measured according to ASTM D 1238, 230°C/2.16 kg, i.e. at 230°C, with a load of 2.16 kg) from 3.5 to 12.0 g/10 min; preferably from 3.8 to 7.5 g/10 min; more preferably from 4.0 to 6.0 g/10 min;
b) from 20 wt% to 60 wt% preferably from 26 wt% to 55 wt% more preferably from 37 wt% to 52 wt% of a propylene ethylene copolymer containing from 1.5 wt% to 6.5 wt%; preferably from 2.0 wt% to 6.1 wt%; more preferably from 3.5 wt% to 5.1 wt% of ethylene derived units, a having a Melt Flow Rate (MFR, measured according to ASTM D 1238, 230°C/2.16 kg, i.e. at 230°C, with a load of 2.16 kg) from 3.5 to 12.0 g/10 min; preferably from 3.8 to 7.5 g/10 min; more preferably from 4.0 to 6.0 g/10 min;

the sum of the amount of a) and b) being 100.

.

Preferably the propylene 1-hexene copolymers component a) is endowed with one or more of the following features:

i) the DSC plot shows at least two peaks having a difference in height ranging from 0 to 5 mW ; preferably from 0 to 3 mW;
ii) the higher melting temperature, measured by DSC, ranging from 141.0 °C to 151.0 °C; preferably from 142.0°C

to 149.0°C; more preferably from 142.5°C to 145.0°C.

Preferably the difference of the melting temperature of the two peaks ranges from 5°C to 20°C; more preferably from 7°C to 15°C; even more preferably from 8°C to 12°C.
The propylene 1-hexene copolymer of the present disclosure contains only propylene and 1-hexene derived units the copolymer can further contain up to 1.0 wt% by weight of ethylene derived units . The propylene ethylene copolymer of the present disclosure contains only propylene and ethylene derived units. The copolymer can further contain up to 1.0 wt% by weight of 1-hexene derived units.
A peak in the DSC curve (temperature/heat of fusion(mW)) is defined as a point on the DSC curve (temperature/heat of fusion) having the highest value of heat of fusion at a temperature A with respect to the values of heat of fusion (mW) in the range ± 5 °C with respect to temperature A.
The melting temperature values are determined by differential scanning calorimetry, according to ISO 11357-3, with a heating rate of 20 °C/minute.
The composition of the present disclosure is endowed with a very low HAZE and a low seal initiating temperature (SIT) so that this material can be advantageously used for the production of film in particular cast or BOPP films.
In particular there is a synergistic effect in the haze of the composition that results lower than the haze of component a) and b) alone.
Components a) and b) of the propylene polymer composition can be obtained with polymerization processes carried out in the presence of stereospecific Ziegler-Natta catalysts supported on magnesium dihalides. By properly dosing the molecular weight regulator (preferably hydrogen).
The polymerization process, which can be continuous or batch, is carried out following known techniques and operating in gas phase, or in liquid phase in the presence or not of inert diluent, or by mixed liquid-gas techniques. It is preferable to carry out the polymerization in gas phase in two reactors.
Polymerization reaction time, pressure and temperature are not critical, however it is best if the temperature is from 20 to 100°C. The pressure can be atmospheric or higher.
As previously mentioned, the regulation of the molecular weight is carried out by using known regulators, hydrogen in particular.
The said stereospecific polymerization catalysts comprise the product of the reaction between:

1) a solid component, containing a titanium compound and an electron-donor compound (internal donor) supported on magnesium dihalide (preferably chloride);
2) an aluminum alkyl compound (cocatalyst); and, optionally,
3) an electron-donor compound (external donor).

Said catalysts are preferably capable of producing homopolymers of propylene having an isotactic index higher than 90% (measured as weight amount of the fraction insoluble in xylene at room temperature).
The solid catalyst component (1) contains as electron-donor a compound generally selected among the ethers, ketones, lactones, compounds containing N, P and/or S atoms, and mono- and dicarboxylic acid esters.
Catalysts having the above mentioned characteristics are well known in the patent literature; particularly advantageous are the catalysts described in US patent 4,399,054 and European patent 45977.
Particularly suited among the said electron-donor compounds are phthalic acid esters and succinic acid esters.
Suitable succinic acid esters are represented by the formula (I):

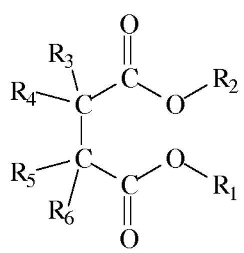

(I)

wherein the radicals $R_1$ and $R_2$, equal to or different from each other, are a C1-C20 linear or branched alkyl, alkenyl, cycloalkyl, aryl, arylalkyl or alkylaryl group, optionally containing heteroatoms; the radicals $R_3$ to $R_6$ equal to or different from each other, are hydrogen or a C1-C20 linear or branched alkyl, alkenyl, cycloalkyl, aryl, arylalkyl or alkylaryl group, optionally containing heteroatoms, and the radicals $R_3$ to $R_6$ which are joined to the same carbon atom can be linked together to form a cycle.
$R_1$ and $R_2$ are preferably C1-C8 alkyl, cycloalkyl, aryl, arylalkyl and alkylaryl groups. Particularly preferred are

the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which $R_3$ to $R_5$ are hydrogen and $R_6$ is a branched alkyl, cycloalkyl, aryl, arylalkyl and alkylaryl radical having from 3 to 10 carbon atoms. Another preferred group of compounds within those of formula (I) is that in which at least two radicals from $R_3$ to $R_6$ are different from hydrogen and are selected from C1-C20 linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is $R_3$ and $R_5$ or $R_4$ and $R_6$ are particularly preferred.

Other electron-donors particularly suited are the 1,3-diethers, as illustrated in published European patent applications EP-A-361 493 and 728769.

As cocatalysts (2), one preferably uses the trialkyl aluminum compounds, such as Al-triethyl, Al-triisobutyl and Al-tri-n-butyl.

The electron-donor compounds (3) that can be used as external electron-donors (added to the Al-alkyl compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical). Examples of the said silicon compounds are those of formula $R_a^1R_b^2Si(OR^3)_c$, where a and b are integer numbers from 0 to 2, c is an integer from 1 to 3 and the sum (a+b+c) is 4; $R^1$, $R^2$, and $R^3$ are alkyl, cycloalkyl or aryl radicals with 1-18 carbon atoms optionally containing heteroatoms.

Thexyltrimethoxysilane (2,3-dimethyl-2-trimethoxysilyl-butane) is particularly preferred.

The previously said 1,3- diethers are also suitable to be used as external donors. In the case that the internal donor is one of the said 1,3-diethers, the external donor can be omitted.

The catalysts may be precontacted with small quantities of olefin (prepolymerization), maintaining the catalyst in supension in a hydrocarbon solvent, and polymerizing at temperatures from room to 60 °C, thus producing a quantity of polymer from 0.5 to 3 times the weight of the catalyst.

Components a) and b) prepared with the above described processes are then blended by using processes known in the art.

The composition according to the present disclosure can also be prepared by subsequential polymerization in two or more reactors wherein in the first reactor component a) is prepared and then component b) is prepared in a subsequent reactor in the presence of component a) or vice versa. The polymerization processes that can be used are that one above described.

The composition of the present disclosure can also contain additives commonly used for olefin polymers like, for example, nucleating and clarifying agents and processing aids.

The propylene polymer composition of the present disclosure can be advantageously used for the production of films. Preferably cast or BOPP film mono or multilayer wherein at least one layer comprises the composition of the present disclosure.

The film obtained with the propylene polymer composition of the present disclosure is characterized by a good dyne retention, this renders the film suitable to being printed even after long time that for example plasma or corona treatment have been applied.

The multilayer films obtained with the propylene polymer composition of the present disclosure are characterized by having at least a skin layer comprising the propylene polymer composition of the present disclosure, the remaining layers can be formed of any material known in the art for use in multilayer films or in film-coated products. Thus, for example, each layer can be formed of a polypropylene homopolymer or copolymer or polyethylene homopolymer or copolymer or other kind of polymers such as EVA, EVOH

The combination and number of the layers of the multilayer structure is not particularly limited. The number is usually from 3 to 11 layers, preferably 3 to 9 layers, and more preferably 3 to 7 layers, and more preferably 3 to 5 layers and combinations including A/B/A, A/B/C, A/B/C/B/A, A/B/C/D/C/B/A are possible, provided that at least a skin layer A comprises the propylene polymer composition of the present disclosure.

Preferred layers of the multilayer film of the present disclosure are 3 or 5 wherein at least one skin layer comprises the propylene/ethylene copolymer of the present disclosure. The preferred structure is A/B/A or A/B/C wherein A is the propylene polymer composition of the present disclosure.

For the purpose of the present disclosure the skin layer is the top layer and/or the bottom layer of a multilayer film.

Preferably in the multilayer film of the present disclosure the top and the bottom layer of the film comprised the propylene/ethylene copolymer of the present disclosure.

EXAMPLES

The following examples are given to illustrate the present invention without limiting purpose.

The data relating to the polymeric materials and the films of the examples are determined by way of the methods reported below.

Melting temperature (ISO 11357-3)

Determined by differential scanning calorimetry (DSC). A sample weighting 6 ± 1 mg, is heated to 200 ± 1° C at a rate of 20 °C/min and kept at 200 ± 1° C for 2 minutes in nitrogen stream and it is thereafter cooled at a rate of 20° C/min to 40 ± 2° C, thereby kept at this temperature for 2 min to crystallise the sample. Then, the sample is again fused at a temperature rise rate of 20° C/min up to 200° C ± 1. The melting scan is recorded, a thermogram is obtained (°C vs. mW), and, from this, temperatures corresponding to peaks are read. The temperature corresponding to the most intense melting peaks recorded during the second fusion is taken as the melting temperatures.

Melt Flow Rate (MFR)

Determined according to ASTM D 1238, at 230° C, with a load of 2.16 kg.

Solubility in xylene at 25°C

2.5 g of polymer and 250 ml of xylene are introduced in a glass flask equipped with a refrigerator and a magnetical stirrer. The temperature is raised in 30 minutes up to the boiling pint of the solvent. The so obtained clear solution is then kept under reflux and stirring for further 30 minutes. The closed flask is then kept for 30 minutes in a bath of ice and water and in thermostatic water bath at 25° C for 30 minutes as well. The so formed solid is filtered on quick filtering paper. 100 ml of the filtered liquid is poured in a previously weighed aluminium container, which is heated on a heating plate under nitrogen flow, to remove the solvent by evaporation. The container is then kept on an oven at 80° C under vacuum until constant weight is obtained. The weight percentage of polymer soluble in xylene at room temperature is then calculated.

Intrinsic viscosity (IV)

Determined in tetrahydronaphthalene at 135° C.

Determination of 1-hexene content by NMR

$^{13}C$ NMR spectra are acquired on an AV-600 spectrometer operating at 150.91 MHz in the Fourier transform mode at 120 °C. The peak of the propylene CH was used as internal reference at 28.83. The $^{13}C$ NMR spectrum is acquired using the following parameters:

| | |
|---|---|
| Spectral width (SW) | 60 ppm |
| Spectrum centre (O1) | 30 ppm |
| Decoupling sequence | WALTZ 65_64pl |
| Pulse program | ZGPG |
| Pulse Length (P1) | for 90° |
| Total number of points (TD) | 32K |
| Relaxation Delay | 15 s |
| Number of transients | 1500 |

The total amount of 1-hexene as molar percent is calculated from diad using the following relations:

$$[P] = PP + 0.5PH$$

$$[H] = HH + 0.5PH$$

Assignments of the $^{13}C$ NMR spectrum of propylene/1-hexene copolymers have been calculated according to the following table:

| Area | Chemical Shift | Assignments | Sequence |
|---|---|---|---|
| 1 | 46.93 - 46.00 | $S_{\alpha\alpha}$ | PP |
| 2 | 44.50 - 43.82 | $S_{\alpha\alpha}$ | PH |
| 3 | 41.34-4.23 | $S_{\alpha\alpha}$ | HH |
| 4 | 38.00 - 37.40 | $S_{\alpha\gamma}$+ $S_{\alpha\delta}$ | PE |
| 5 | 35.70 -35.0 | $4B_4$ | H |
| 6 | 35.00 - 34.53 | $S_{\alpha\gamma}$+ $S_{\alpha\delta}$ | HE |
| 7 | 33.75 33.20 | CH | H |
| 8 | 33.24 | $T_{\delta\delta}$ | EPE |
| 9 | 30.92 | $T_{\beta\delta}$ | PPE |
| 10 | 30.76 | $S_{\gamma\gamma}$ | XEEX |
| 11 | 30.35 | $S_{\gamma\delta}$ | XEEE |
| 12 | 29.95 | $S_{\delta\delta}$ | EEE |
| 13 | 29.35 | $3B_4$ | H |
| 14 | 28.94 - 28.38 | CH | P |
| 15 | 27.43 - 27.27 | $S_{\beta\delta}$ | XEE |
| 16 | 24.67 -24.53 | $S_{\beta\beta}$ | XEX |
| 17 | 23.44 -23.35 | $2B_4$ | H |
| 18 | 21.80 - 19.90 | $CH_3$ | P |
| 19 | 14.22 | $CH_3$ | H |

**$^{13}C$ NMR of propylene/ethylene copolymers**

$^{13}C$ NMR spectra were acquired on a Bruker AV-600 spectrometer equipped with cryoprobe, operating at 160.91 MHz in the Fourier transform mode at 120°C.

The peak of the $S_{\beta\beta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules, 1982, 15, 1150) using the following equations:

$$PPP = 100\ T_{\beta\beta}/S$$

$$PEP = 100\ S_{\beta\beta}/S$$

$$PPE = 100\ T_{\beta\delta}/S$$

$$PEE= 100\ S_{\beta\delta}/S$$

$$EPE = 100\ T_{\delta\delta}/S$$

$$EEE = 100\ (0.25\ S_{\gamma\delta}+0.5\ S_{\delta\delta})/S$$

$$S = T_{\beta\beta} + T_{\beta\delta} + T_{\delta\delta} + S_{\beta\beta} + S_{\beta\delta} + 0.25\ S_{\gamma\delta} + 0.5\ S_{\delta\delta}$$

The molar percentage of ethylene content was evaluated using the following equation:
E% mol = 100 * [PEP+PEE+EEE]The weight percentage of ethylene content was evaluated using the following equation:

$$E\%\ wt. = \frac{100 * E\%\ mol * MW_E}{E\%\ mol * MW_{E} + P\%\ mol * MW_P}$$

where P% mol is the molar percentage of propylene content, while $MW_E$ and MWp are the molecular weights of ethylene and propylene, respectively.

The product of reactivity ratio $r_1r_2$ was calculated according to Carman (C.J. Carman, R.A. Harrington and C.E. Wilkes, Macromolecules, 1977; 10, 536) as:

$$r_1r_2 = 1 + \left(\frac{EEE+PEE}{PEP}+1\right) - \left(\frac{P}{E}+1\right)\left(\frac{EEE+PEE}{PEP}+1\right)^{0.5}$$

The tacticity of Propylene sequences was calculated as mm content from the ratio of the PPP mm$T_{\beta\beta}$ (28.90-29.65 ppm) and the whole $T_{\beta\beta}$ (29.80-28.37 ppm)

**Seal Initiation Temperature (SIT)**

**Preparation of the film specimens**

Some films with a thickness of 50 μm are prepared by extruding each test composition in a a single screw Collin extruder (length/diameter ratio of screw 1:25) at a film drawing speed of 7 m/min and a melt temperature do 210-250 °C. Each resulting film is superimposed on a 1000 μm thick film of a propylene homopolymer having a xylene insoluble fraction of 97 wt% and a MFR L of 2 g/10 min. The superimposed films are bonded to each other in a Carver press at 200°C under a 9000 kg load, which is maintained for 5 minutes. The resulting laminates are stretched longitudinally and transversally, i.e. biaxially, by a factor 6 with a TOM Long film stretcher at 150°C, thus obtaining a 20 μm thick film (18 μm homopolymer+2 μm test). 2x5 cm specimens are cut from the films.

**Determination of the SIT.**

For each test two of the above specimens are superimposed in alignment, the adjacent layers being layers of the particular test composition. The superimposed specimens are sealed along one of the 2 cm sides with a Brugger Feinmechanik Sealer, model HSG-ETK 745. Sealing time is 5 seconds at a pressure of 0.1 $N/mm^2$. The sealing temperature is increased of 2°C for each seal, starting from about 10 °C less than the melting temperature of the test composition. The sealed samples are left to cool and then their unsealed ends are attached to an Instron machine where they are tested at a traction speed of 50 mm/min.

The SIT. is the minimum sealing temperature at which the seal does not break when a load of at least 2 Newtons is applied in the said test conditions.

**Determination of the Haze**

50 μm film speciments prepared as described above for the SIT measure have been used. The haze value is measured using a Gardner photometric unit connected to a Hazemeter type UX-10 or an equivalent instrument having G.E. 1209 light source with filter "C". Reference samples of known haze are used for calibrating the instrument.

**PREPARATION OF THE COPOLYMER OF PROPYLENE WITH 1-HEXENE**

The copolymer is prepared as follows.

The solid catalyst component used in polymerization is a highly stereospecific Ziegler-Natta catalyst component supported on magnesium chloride, containing about 2.2% by weight of titanium and diisobutylphthalate as internal donor, prepared by analogy with the method described in WO03/054035 for the preparation of catalyst component A .

**CATALYST SYSTEM AND PREPOLYMERIZATION TREATMENT**

Before introducing it into the polymerization reactor, the solid catalyst component described above is contacted at 15 °C for about 6 minutes with aluminum triethyl (TEAL) and thexyltrimethoxysilane (2,3-dimethyl-2-trimethoxysilyl-butane), in a TEAL/ thexyltrimethoxysilane weight ratio equal to about 7 and in such quantity that the TEAL/solid catalyst component weight ratio be equal to about 6.

The catalyst system is then subjected to prepolymerization by maintaining it in suspension in liquid propylene at 20 °C for about 20 minutes before introducing it into the polymerization reactor.

Polymerization

The polymerization is carried out in a two gas phase polymerization reactors by feeding in a continuous and constant flow the prepolymerized catalyst system, hydrogen (used as molecular weight regulator), propylene and 1-hexene in the gas state.

The main polymerization conditions are reported in table 1

Table 1

| first reactor | | first reactor | second reactor |
|---|---|---|---|
| Temperature: | °C | 75 | 75 |
| Pressure | bar-g | 16 | 16 |
| residence time | min | 46 | 46 |
| C6/C6+C3 | mol/mol | 0.010 | 0.022 |
| H2/C3 | mol/mol | 0.016 | 0.017 |
| C3 = propylene; C6 = 1-hexene H2 = hydrogen | | | |

The polymer particles exiting the reactor are subjected to a steam treatment to remove the reactive monomers and volatile substances, and then dried.

The property of the copolymer obtained in example 1 are reported in table 2.

Table 2

| | | component a) |
|---|---|---|
| 1-hexene content | wt% | 7.4 |
| MFR | g/10 min | 4.4 |
| xylene solubles 25°C | wt% | 18.0 |
| melting temperatures | °C | 135.1-143.7 |
| Height DSC | mW | 22 - 24 |
| Haze (film) | % | 0.55 |

(continued)

| | | component a) |
|---|---|---|
| SIT | °C | 91°C |

Propylene ethylene copolymers

Two commercial propylene ethylene copolymers sold by Lyondellbasell have been used to prepare the composition. The feature of the propylene copolymers are reported in table 3

Table 3

| | | component b1 | component b2 |
|---|---|---|---|
| C2 content | wt% | 2.2 | 4.6 |
| Tm | °C | 148 | 139 |
| MFR | g/10 min | 9 | 7.8 |
| haze | % | 0.25 | 0.30 |
| Xylene solubles25°C | wt% | 4.7 | 7.0 |
| SIT | °C | nm | 120 |
| Nm not measured | | | |

Examples 1-5

Component a) has been blended with various amount of components b1) and b2). The features of the obtained composition are reported on table 4

Table 4

| ex | | 1 | 2 | 3 | 4 | 5 |
|---|---|---|---|---|---|---|
| comp b1 split | wt% | 40 | 50 | 0 | 0 | 0 |
| comp b2 split | wt% | 0 | 0 | 30 | 40 | 50 |
| Tm | °C | 141.7 | 143.4 | 137.4 | 134.4 | 135.7 |
| Xs | wt% | 9.5 | 7.5 | 13.3 | 13.1 | 11.3 |
| SIT | °C | 103 | 106 | 95 | 98 | 100 |
| haze | % | 0.14 | 0.14 | 0.21 | 0.15 | 0.16 |

From table 4 clearly results that the resulting composition maintains a good value of SIT with respect to the original components and above all the resulting haze is lower than the haze of the original components. Thus the resulting cast film is improved in transparency retaining the low seal initiating temperature.

**Multilayer film**

The polymers of examples 1, 3 and 4 have been used to produce a A/B/A multilayer film wherein the A layer are the polymers of the examples and the B layer is a propylene homopolymer MOPLEN HP515M sold by Lyondellbasell. The film is 50 micron thick wherein layer A is 20 % of the overall thickness and layer B is 60 % of the overall thickness the processing parameters are reported in table 5.

Table 5

| | | Barrel temperature | | | Die | 1st chill roll | 2nd Chill roll | Throughput | Line speed |
|---|---|---|---|---|---|---|---|---|---|
| | | (°C) | | | | | | Kg/h | m/min |
| **Layer A (20)** | Chill roll treated outside roll | 255 | 255 | 255 | | | | 166 | |
| **Layer B (60)** | Core | 240 | 250 | 250 | 250 | 30 | 45 | 391+107 | 90 |
| **Layer C (20)** | Internal sealing inside roll | 250 | 255 | 255 | | | | 166 | |

Sample of the obtained films have been subjected to a corona treatment and then the surface tension has been measured after one week and after one month. The results are reported in table 6.

Table 6

| Ex | 3 | 4 |
|---|---|---|
| surface tension after days | dyne/cm | dyne/cm |
| 1 | 40 | 40 |
| 7 | 40 | 40 |
| 30 | 40 | 40 |
| 60 | 40 | 40 |
| 90 | 40 | 40 |
| 150 | 40 | 40 |

From table 6 clearly results that the films of the present disclosure maintains an high surface tension even after 150 days. This allow a better printability of the films even after long time, thus the films have a long shelf life after the corona treatment.

## Claims

**1.** A propylene polymer composition comprising:

a) from 40 wt% to 80 wt% of a propylene 1-hexene copolymer containing from 5.5 to 9.0% by weight, of 1-hexene derived units having a Melt Flow Rate (MFR, measured according to ASTM D 1238, 230°C/2.16 kg, i.e. at 230°C, with a load of 2.16 kg) from 3.5 to 12.0 g/10 min;
b) from 20 wt% to 60 wt% of a propylene ethylene copolymer containing from 1.5 wt% to 6.5 wt% of ethylene derived units, a having a Melt Flow Rate (MFR, measured according to ASTM D 1238, 230°C/2.16 kg, i.e. at 230°C, with a load of 2.16 kg) from 3.5 to 12.0 g/10 min;

the sum of the amount of a) and b) being 100.

**2.** The propylene polymer composition according to claim 1 wherein component a) ranges from from 45 wt% to 74 wt%; and component b) ranges from 26 wt% to 55 wt%.

**3.** The propylene polymer composition according to claim 2 wherein component a) ranges from from preferably from 48 wt% to 63 wt% and component b) ranges from 37 wt% to 52 wt%.

**4.** The propylene polymer composition according to anyone of claims 1- 3 wherein component a) contains from 6.0 to 8.5% by weight of 1-hexcene derived units.

5. The propylene polymer composition according to anyone of claims 1-4 wherein component b) contains from 2.0 wt% to 6.1 wt%; of ethylene derived units.

6. The propylene polymer composition according to anyone of claims 1-5 wherein in component a) the DSC plot shows at least two peaks having a difference in height ranging from 0 to 5 mW ; preferably from 0 to 3 mW.

7. The propylene polymer composition according to anyone of claims 1-6 wherein in component a) the higher melting temperature, measured by DSC, ranges from 141.0 °C to 151.0 °C.

8. The propylene polymer composition according to anyone of claims 1-7 wherein in component a) the difference of the melting temperature of the two peaks ranges from 5°C to 20°C.

9. The propylene polymer composition according to anyone of claims 1-8 wherein in component a) the Melt Flow Rate (MFR, measured according to ASTM D 1238, 230°C/2.16 kg, i.e. at 230°C, with a load of 2.16 kg) ranges from 3.8 to 7.5 g/10 min.

10. The propylene polymer composition according to anyone of claims 1-9 wherein in component b) the Melt Flow Rate (MFR, measured according to ASTM D 1238, 230°C/2.16 kg, i.e. at 230°C, with a load of 2.16 kg) ranges from 3.8 to 7.5 g/10 min

11. A film comprising the propylene polymer composition according to anyone of claims 1-10.

12. The film of claim 11 being a cast film or a BOPP film.

13. The multilayer film comprising at least a skin layer comprising the propylene polymer composition according to anyone of claims 1-10.

14. The multilayer film according to claim 13 having from 3 to 11 layers.

15. The multilayer film according to claim 13 having an A/B/A or A/B/C structure wherein the A layer comprises the propylene polymer composition according to anyone of claims 1-10.

**Patentansprüche**

1. Propylenpolymerzusammensetzung, umfassend:

   a) 40 Gew.% bis 80 Gew.% von einem Propylen-1-Hexen-Copolymer, das 5,5 bis 9,0 Gew.% von 1-Hexen abgeleitete Einheiten enthält, mit einer Schmelzflussrate (MFR, gemessen gemäß ASTM D 1238, 230 °C/2,16 kg, d. h. bei 230 °C unter einer Last von 2,16 kg) von 3,5 bis 12,0 g/10 min;
   b) 20 Gew.% bis 60 Gew.% von einem Propylen-Ethylen-Copolymer, das 1,5 bis 6,5 Gew.% von Ethylen abgeleitete Einheiten enthält, mit einer Schmelzflussrate (MFR, gemessen gemäß ASTM D 1238, 230 °C/2,16 kg, d. h. bei 230 °C unter einer Last von 2,16 kg) von 3,5 bis 12,0 g/10 min;

   wobei die Summe der Menge von a) und b) 100 beträgt.

2. Propylenpolymerzusammensetzung nach Anspruch 1, wobei Komponente a) im Bereich von 45 Gew.% bis 74 Gew.% liegt und Komponente b) im Bereich von 26 Gew.% bis 55 Gew.% liegt.

3. Propylenpolymerzusammensetzung nach Anspruch 2, wobei Komponente a) im Bereich von vorzugsweise 48 Gew.% bis 63 Gew.% liegt und Komponente b) im Bereich von 37 Gew.% bis 52 Gew.% liegt.

4. Propylenpolymerzusammensetzung nach einem der Ansprüche 1 bis 3, wobei Komponente a) 6,0 bis 8,5 Gew.% von 1-Hexen abgeleitete Einheiten aufweist.

5. Propylenpolymerzusammensetzung nach einem der Ansprüche 1 bis 4, wobei Komponente b) 2,0 Gew.% bis 6,1 Gew.% von Ethylen abgeleitete Einheiten enthält.

6. Propylenpolymerzusammensetzung nach einem der Ansprüche 1 bis 5, wobei die DSC-Kurve in Komponente a) mindestens zwei Peaks mit einer Höhendifferenz im Bereich von 0 bis 5 mW, vorzugsweise 0 bis 3 mW, zeigt.

7. Propylenpolymerzusammensetzung nach einem der Ansprüche 1 bis 6, wobei in Komponente a) die höhere Schmelztemperatur, gemessen mittels DSC, im Bereich von 141,0 °C bis 151,0 °C liegt.

8. Propylenpolymerzusammensetzung nach einem der Ansprüche 1 bis 7, wobei in Komponente a) die Differenz der Schmelztemperatur der beiden Peaks im Bereich von 5 °C bis 20 °C liegt.

9. Propylenpolymerzusammensetzung nach einem der Ansprüche 1 bis 8, wobei in Komponente a) die Schmelzflussrate (MFR, gemessen gemäß ASTM D 1238, 230 °C/2,16 kg, d. h. bei 230 °C unter einer Last von 2,16 kg) im Bereich von 3,8 bis 7,5 g/10 min liegt.

10. Propylenpolymerzusammensetzung nach einem der Ansprüche 1 bis 9, wobei in Komponente b) die Schmelzflussrate (MFR, gemessen gemäß ASTM D 1238, 230 °C/2,16 kg, d. h. bei 230 °C unter einer Last von 2,16 kg) im Bereich von 3,8 bis 7,5 g/10 min liegt.

11. Folie, die die Propylenpolymerzusammensetzung nach einem der Ansprüche 1 bis 10 umfasst.

12. Folie nach Anspruch 11, die eine Gießfolie oder eine BOPP-Folie ist.

13. Mehrschichtfolie, umfassend mindestens eine Hautschicht, die die Propylenpolymerzusammensetzung nach einem der Ansprüche 1 bis 10 umfasst.

14. Mehrschichtfolie nach Anspruch 13 mit 3 bis 11 Schichten.

15. Mehrschichtfolie nach Anspruch 13 mit einer A/B/A- oder A/B/C-Struktur, wobei die A-Schicht die Propylenpolymerzusammensetzung nach einem der Ansprüche 1 bis 10 umfasst.

## Revendications

1. Composition de polymère de propylène comprenant :

   a) 40% en poids à 80% en poids d'un copolymère de propylène-1-hexène contenant 5,5 à 9,0% en poids de motifs dérivés de 1-hexène, possédant un indice de fluidité à chaud (MFR, mesuré selon la norme ASTM D 1238, 230°C/2,16 kg, c'est-à-dire à 230°C sous une charge de 2,16 kg) de 3,5 à 12,0 g/10 min ;
   b) 20% en poids à 60% en poids d'un copolymère de propylène-éthylène contenant 1,5% en poids à 6,5% en poids de motifs dérivés de l'éthylène, possédant un indice de fluidité à chaud (MFR, mesuré selon la norme ASTM D 1238, 230°C/2,16 kg, c'est-à-dire à 230°C sous une charge de 2,16 kg) de 3,5 à 12,0 g/10 min ;

   la somme de la quantité de a) et de b) valant 100.

2. Composition de polymère de propylène selon la revendication 1, le composant a) allant de 45% en poids à 74% en poids ; et le composant b) allant de 26% en poids à 55% en poids.

3. Composition de polymère de propylène selon la revendication 2, le composant a) allant préférablement de 48% en poids à 63% en poids et le composant b) allant de 37% en poids à 52% en poids.

4. Composition de polymère de propylène selon l'une quelconque des revendications 1 à 3, le composant a) contenant 6,0 à 8,5% en poids de motifs dérivés de 1-hexène.

5. Composition de polymère de propylène selon l'une quelconque des revendications 1 à 4, le composant b) contenant 2,0% en poids à 6,1% en poids de motifs dérivés de l'éthylène.

6. Composition de polymère de propylène selon l'une quelconque des revendications 1 à 5, la courbe DSC (calorimétrie différentielle à balayage) dans le composant a) montrant au moins deux pics présentant une différence de hauteur allant de 0 à 5 mW ; préférablement de 0 à 3 mW.

7. Composition de polymère de propylène selon l'une quelconque des revendications 1 à 6, la température de fusion plus élevée dans le composant a), mesurée par DSC, allant de 141,0°C à 151,0°C.

8. Composition de polymère de propylène selon l'une quelconque des revendications 1 à 7, la différence de la température de fusion des deux pics dans le composant a) allant de 5°C à 20°C.

9. Composition de polymère de propylène selon l'une quelconque des revendications 1 à 8, l'indice de fluidité à chaud (MFR, mesuré selon la norme ASTM D 1238, 230°C/2,16 kg, c'est-à-dire à 230°C sous une charge de 2,16 kg) dans le composant a) allant de 3,8 à 7,5 g/10 min.

10. Composition de polymère de propylène selon l'une quelconque des revendications 1 à 9, l'indice de fluidité à chaud (MFR, mesuré selon la norme ASTM D 1238, 230°C/2,16 kg, c'est-à-dire à 230°C sous une charge de 2,16 kg) dans le composant b) allant de 3,8 à 7,5 g/10 min.

11. Film comprenant la composition de polymère de propylène selon l'une quelconque des revendications 1 à 10.

12. Film selon la revendication 11 qui est un film coulé ou un film BOPP.

13. Film multicouche comprenant au moins une couche de revêtement comprenant la composition de polymère de propylène selon l'une quelconque des revendications 1 à 10.

14. Film multicouche selon la revendication 13 possédant 3 à 11 couches.

15. Film multicouche selon la revendication 13 possédant une structure A/B/A ou A/B/C, la couche A comprenant la composition de polymère de propylène selon l'une quelconque des revendications 1 à 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006002778 A
- WO 2009077287 A
- WO 2015062787 A
- US 4399054 A
- EP 45977 A
- EP 361493 A
- EP 728769 A
- WO 03054035 A


### Non-patent literature cited in the description


- **C. J. CARMAN ; R. A. HARRINGTON ; C. E. WILKES.** Monomer Sequence Distribution in Ethylene-Propylene Rubber Measured by 13C NMR. 3. Use of Reaction Probability Mode. *Macromolecules,* 1977, vol. 10, 536
- **M. KAKUGO ; Y. NAITO ; K. MIZUNUMA ; T. MIYATAKE.** Carbon-13 NMR determination of monomer sequence distribution in ethylene-propylene copolymers prepared with δ-titanium trichloride-diethylaluminum chloride. *Macromolecules,* 1982, vol. 15, 1150
- **C.J. CARMAN ; R.A. HARRINGTON ; C.E. WILKES.** *Macromolecules,* 1977, vol. 10, 536